# EUROPEAN PATENT SPECIFICATION

(11) **EP 2 458 706 B1**
(45) Date of publication and mention of the grant of the patent: **27.03.2013**
(21) Application number: 10193026.1
(22) Date of filing: 29.11.2010
(51) Int. Cl.: H02J 7/00

(54) **Charging cradle**
Ladestation
Station d'accueil de chargement

(43) Date of publication of application: 30.05.2012
(73) Proprietor: Research In Motion Limited, Waterloo, ON N2L 3W8 (CA)
(72) Inventor: Chen, Chao, Waterloo Ontario N2L 3W8 (CA)
(74) Representative: Patel, Binesh

(56) References cited:
- EP-A1- 2 073 338
- EP-A2- 1 998 423
- EP-A2- 2 112 740
- DE-A1-102004 044 089
- US-A1- 2005 225 294
- US-A1- 2010 173 674

## Description

### TECHNICAL FIELD

The present invention relates to a charging cradle and, in particular, to a charging cradle that prevents short-circuiting.

### BACKGROUND

A charging cradle is an often included accessory for mobile electronic devices such as notebooks, cellphones, and portable music players. It is used to charge the rechargeable battery that powers the device. When the battery of the portable device is depleted, the user of such device places the device containing the rechargeable battery (or the battery itself) into the cradle. When the charging contact of the device mates with the charging contact of the cradle, recharging begins. One of the shortcomings of current charging cradle is that the charging contact of the charging cradle may come into contact with the housing of the device (or the battery) as the device (or the battery) is being inserted into the cradle. If the housing of the device (or the battery) is a conductive material, then the charging circuit in the charging cradle may be short-circuited.

A charging cradle that prevents short-circuiting would thus be highly desirable.

EP 2 112 740 discloses a charger which is arranged to switch on automatically when a device, such as a mobile phone, is connected to the charger and switch off automatically when the device is removed from the charger. This is achieved by providing the charger with an interface, for the device to connect to, and a switch. The interface and switch are arranged on the charger such that the switch is depressed when the device is connected to the charger. Depressing the switch causes electricity to flow to the interface and allows the device to be charged.

United States Patent Application Publication No. US2010/0173674 relates to a holding base for removably holding an electronic device, which has a holding base body, a signal terminal provided in the holding base body, and connected to the electronic device in a holding position in which the electronic device is held, and a first connector attached to a surface of a printed circuit board, connected to the signal terminal, and connected to another electronic device. The printed circuit board is held by a bottom of the holding base body with the first connector held underneath the printed circuit board, such that a connecting port of the first connector faces a back side of the holding base body, and with an end edge of a front side of the holding base body positioned lower than an end edge of the back side thereof by an offset amount. The offset amount is set to be less than a thickness of the first connector.

### SUMMARY

Accordingly, the present invention relates to a charging cradle for a rechargeable medium, as recited in claim 1.

### BRIEF DESCRIPTION OF THE DRAWINGS

These and other features of the present technology will become more apparent from the following description in which reference is made to the appended drawings wherein:
Figure 1A is a front view of a rechargeable medium for use with the present technology;
Figure 1B is a back view of the rechargeable medium of Figure 1A;
Figures 2 represents a front view of the rechargeable medium of Figures 1A and 1B and an example of a charging cradle,
Figure 3A is a front view of the rechargeable medium of Figures 1A and 1B being inserted into a charging cradle implementing an embodiment of the invention the charging circuit of the charging cradle being in a non-charging state;
Figure 3B is a front view of the rechargeable medium of Figures 1A and 1B being charged by the charging cradle of Figure 3A when the charging circuit of the charging cradle is in a charging state;
Figure 4A is a front view of the rechargeable medium of Figures 1A and 1B being inserted into a charging cradle representing an example of a charging cradle the charging circuit of the charging cradle being in a non-charging state; and
Figure 4B is a front view of the rechargeable medium of Figures 1A and 1B being charged by the charging cradle of Figure 4A when the charging circuit of the charging cradle is in a charging state.

### DETAILED DESCRIPTION

While the patent disclosure is described in conjunction with the specific embodiment, it will be understood that it is not intended to limit the patent disclosure to the described embodiments. In the above description, numerous specific details are set forth in order to provide a thorough understanding of the present patent disclosure. The present patent disclosure may be practiced without some or all of these specific details.

In this specification and the appended claims, the singular forms "a," "an," and "the" include plural references unless the context clearly dictates otherwise. Unless defined otherwise, all technical and scientific terms used herein have the same meaning as commonly understood to one of ordinary skill in the art to which this technology belongs.

It will be further understood that the terms "comprises" or "comprising", or both when used in this specification, specify the presence of stated features, integers, steps, operations, elements, and/or components, but do not preclude the presence or addition of one or more other features, integers, steps, operations, elements, components, and/or groups thereof.

The details and particulars of the technology will now be described below, by way of example, with reference to the attached drawings.

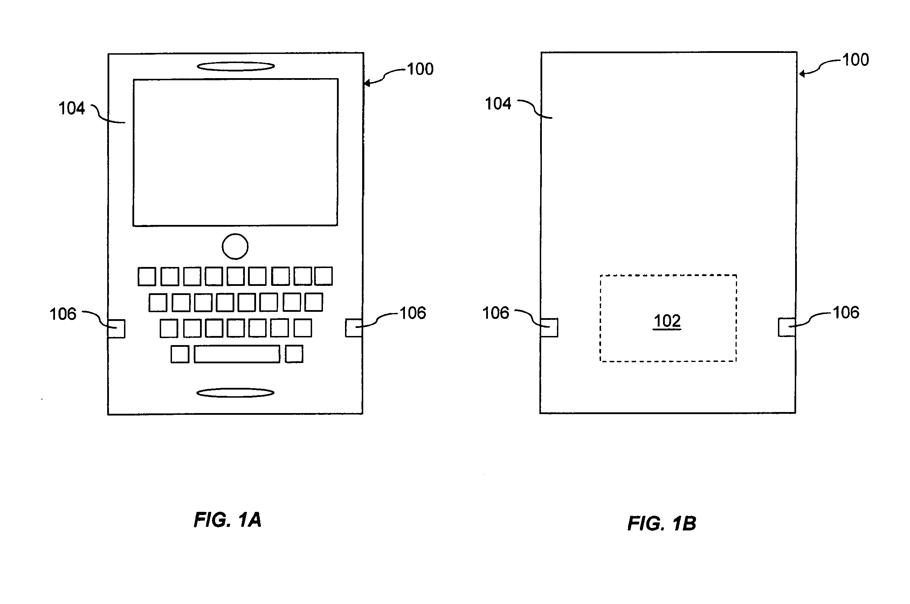

Referring to FIGs. 1A and 1B, a rechargeable medium 100 with a rechargeable battery 102 is illustrated. The rechargeable battery 102 may be encased in a housing 104 of the rechargeable medium 100. While the rechargeable medium 100 is depicted as having generally the proportions of a smart phone, it may be other portable devices including laptops, tablets, personal entertainment devices or other portable devices with a battery. Moreover, the rechargeable medium 100 may simply be the battery of the portable device. By recharging only the battery of the portable device, advantageously, the user of the portable device would be able to continue using the device with a spare battery.

The rechargeable medium 100 has a charging contact 106 through which the rechargeable medium 100 may be recharged. While the rechargeable medium 100 is depicted as having two charging contacts 106, it is understood that the rechargeable medium 100 may have one or more charging contacts 106.

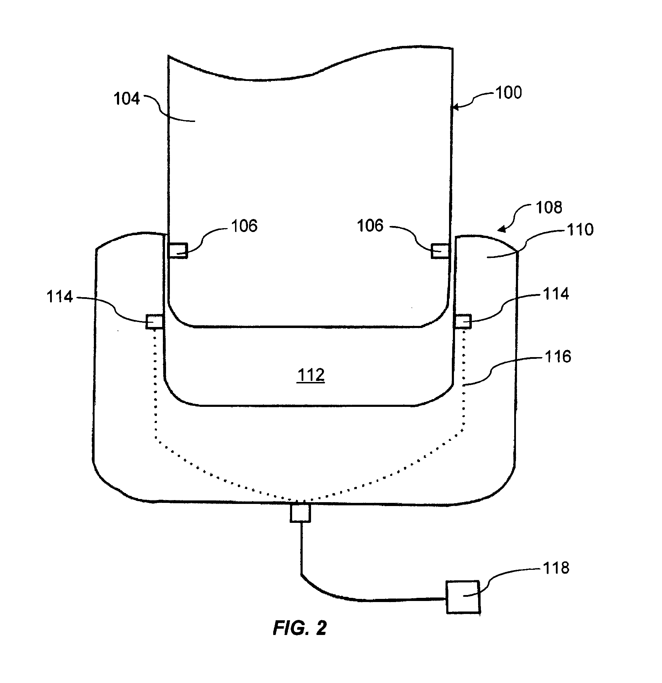

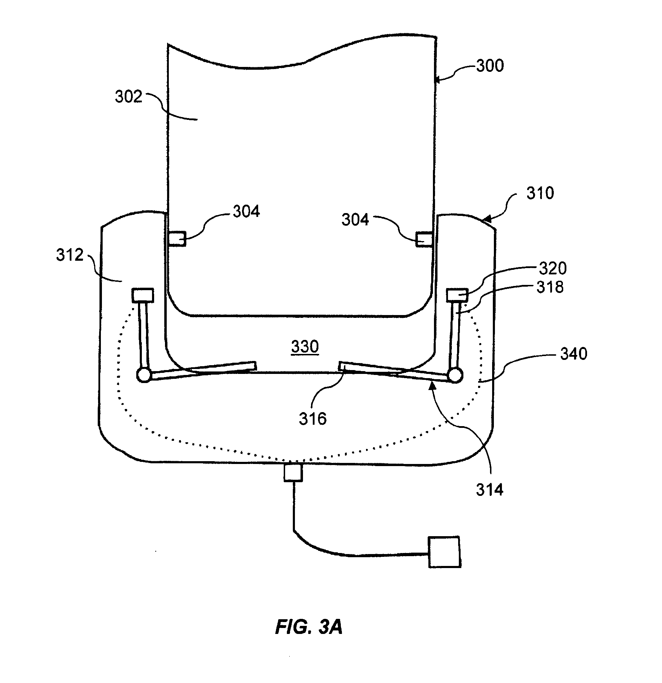

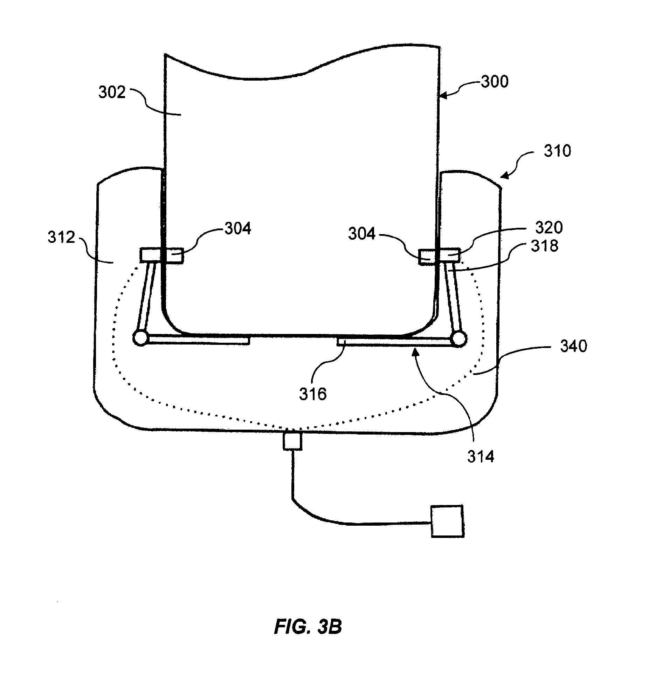

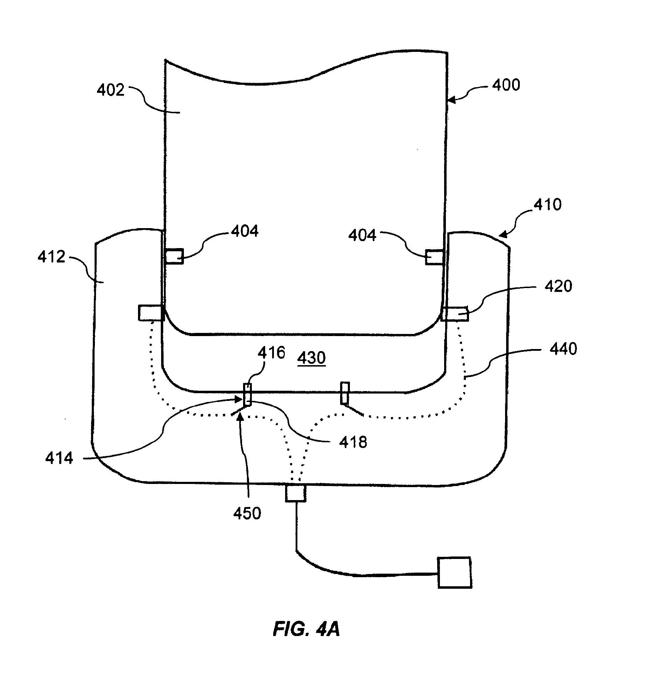

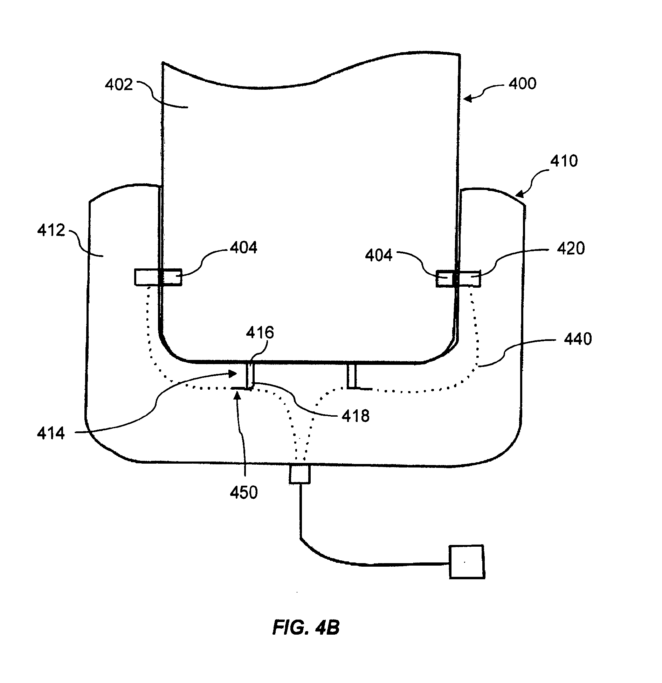

Turning to FIG. 2, the rechargeable medium 100 may be recharged using a charging cradle 108 having a cradling-body 110. While the charging cradle 108 is depicted as having generally the proportions of a cradle for a smartphone or a portable entertainment device, it is understood that the cradle may be other charging devices such as a docking station for a notebook or a tablet. The cradling-body 110 has a receiving area 112 shaped to receive the rechargeable medium 100. The cradling-body 110 further has a charging contact 114 for charging the rechargeable medium 100. While the charging contact 114 is depicted as having two charging contacts 114, it is understood that the cradling-body 110 may have one or more charging contacts 114. The charging contact 114 is electrically coupled to the charging circuit 116, which may be coupled to a power source 118. To prevent short-circuiting of the charging circuit 116 while the rechargeable medium 100 is being inserted into the receiving area 112 of the cradling-body 110, a switch is included in the cradling-body 110 (specific implementation shown in FIGs. 3 and 4 and discussed below). The switch interacts with the rechargeable medium 100 to place the charging circuit 116 in either a charging state or a non-charging state.

Thus, when the rechargeable medium 100 is fully inserted into the receiving area 112 of the cradling-body 110 such that the charging contact 106 of the rechargeable medium 100 is aligned with the charging contact 114 of the cradling-body 110, the switch is positioned to place the charging circuit 116 in the charging state. Otherwise, the switch is positioned to place the charging circuit 116 in the non-charging state.

The specific implementations of the charging cradle 108 will now be described below.

### Charging Cradle Using a Mechanical Switch

In FIGs. 3A and 3B, there is shown an implementation of the present invention. In this implementation, the charging cradle 310 has a cradling-body 312 with a switch in the form of an actuator 314 that is pivotally mounted to the cradling-body 312. While in FIGs 3A and 3B, the charging cradle 310 is depicted with two actuators 314, it is understood that the charging cradle 310 may have one or more actuators 314.

The actuator 314 has a first end 316 and a second end 318. The first end 316 is positioned in the receiving area 330 to interact with the rechargeable medium 300 and the second end 318 of the actuator 314 is coupled to the movable charging contact 320. As shown in FIGs. 3A and 3B, the charging contact 320 is movable to mate with the charging contact 304 of the rechargeable medium 300. In FIG. 3B, the charging contact 320 of the charging cradle 310 is electrically coupled to the charging contact 304 of the rechargeable medium 300. When the rechargeable medium 300 is not fully inserted into the receiving area 330 (or the rechargeable medium 300 is not present), the charging contact 320 is moved by the actuator 314 to electrically decouple itself from the charging contact 304 of the rechargeable medium 304, as shown in FIG. 3A.

Thus, the state of the charging circuit 340 is determined by the position of the actuator 314, which is influenced by the rechargeable medium 300. In FIG. 3A, where the rechargeable medium 300 is not fully inserted into the receiving area 330 (or the rechargeable medium 300 is not present), the actuator 314 is biased such that the second end 318 of the actuator 314 places the charging contact 320 of the charging cradle 310 in the non-charging state. In this implementation, the non-charging state is created by moving the charging contact 320 inside the cradle-body 312. In this position, even if the housing 302 of the rechargeable medium 300 is a conductive material, the housing 302 cannot short-circuit the charging circuit 340.

When the rechargeable medium 300 is fully inserted into the receiving area 330, as shown in FIG. 3B, the rechargeable medium 300 interacts with the first end 316 of the actuator 314. In this particular implementation, as the charging contact 304 of the rechargeable medium 300 aligns with the charging contact 320 of the charging cradle 310, the rechargeable medium 300 urges the first end 316 of the actuator 314. Because the actuator 314 is pivotally mounted to the cradling body 312, the movement of the first end 314 causes the second end 318 of the actuator 314 to move toward and protrude out into the receiving area 330. When the rechargeable medium 300 is fully inserted into the receiving area 330, the second end 318 of the actuator 314, along with the charging contact 320, is positioned such that the charging contact 320 of the charging cradle 310 is electrically coupled to the charging contact 304 of the rechargeable medium 300. Once electrically coupled, the charging circuit 340 begins to charge the rechargeable medium 300. In effect, the rechargeable medium 300 urges the second end 318 of the actuator 314, via the first end 316, to place the charging circuit 340 in the charging state.

Thus, through the interaction between the rechargeable medium 300 and the actuator 314, the charging cradle 310 is able to prevent short-circuiting of the charging circuit 340. Only when the rechargeable medium 300 is fully inserted into the receiving area 330, the charging contact 320 of the charging cradle 310 would protrude out of the cradle-body 312 to electrically couple with the charging contact 304 of the rechargeable medium 300. When the rechargeable medium 300 is not fully inserted into the receiving area 330 or when the rechargeable medium 300 is not present, the charging contact 320 is retracted into the cradle-body 312 by the actuator 314. As a result, short-circuiting of the charging circuit 340 is prevented.

### Charging Cradle Using an Electro-Mechanical Switch

An example of a charging cradle 410 is shown in FIGs. 4A and 4B. The charging cradle 410 has a cradling-body 412 with a fixed charging contact 420. The fixed charging contact 420 protrude into the receiving area 430 such that when the rechargeable medium 400 is fully inserted into the receiving area 430, as shown in FIG. 4B, the fixed charging contact 420 is able to electrically couple with the charging contact 404 of the rechargeable medium 400.

The charging cradle 410 further includes a switch in the form of an actuator 414. The actuator 414 has a first end 416 and a second end 418. The first end 416 is positioned in the receiving area 430 to interact with the rechargeable medium 400. The second end 418 of the actuator 414 is positioned such that the electrical switch 450 is openable and closeable by the second end 418. The electrical switch 450, in conjunction with the actuator 414, places the charging circuit in a charging state or a non-charging state. While in FIGs. 4A and 4B, the charging cradle 410 is depicted as having two actuators 414 and two corresponding electrical switches 450, one or more actuators 414 and electrical switches 450 may be included in the charging cradle 410.

When the rechargeable medium 400 is not fully inserted into the receiving area 430, as shown in FIG. 4A, the actuator 414 is biased to place the electrical switch 450 in the electrically open position. In this position, the charging circuit 440 is in a non-charging state. Thus, even if the housing 402 is a conductive material, the charging circuit 440 is prevented from being short-circuited. By contrast, without the actuator 414 and the electrical switch 450, the conductive material of the housing 402 would complete the charging circuit 440 without a load (i.e. battery) and thus, the charging circuit 440 would be short-circuited.

As the rechargeable medium 400 is slid into the receiving area 430, the rechargeable medium 400 starts to urge the first end 416 of the actuator 414. The movement of the first end 416 translates into a movement of the second end 418, which is positioned to close or open the electrical switch 450. When the rechargeable medium 400 is fully inserted into the receiving area 430, the actuator 414 forces the electrical switch 450 closed. Since, at this position, the charging contact 404 of the rechargeable medium 400 is electrically coupled to the charging contact 420 of the charging cradle 410, as shown in FIG. 4B, the charging circuit 440 starts to conduct electricity and in turn, charges the rechargeable medium 400. In effect, the rechargeable medium 400 urges the second end 418 of the actuator 414, via the first end 416, to place the charging circuit 440 in the charging state.

While the switch has been described with respect to a mechanical and an electro-mechanical implementation, it will be appreciated that other switches, such as a magnetic switch, that interact with the rechargeable medium may be possible without departing from the scope of the invention as defined in the claims. In an implementation using a magnetic switch, when the rechargeable medium is fully inserted into the receiving area of the charging cradle, the magnetic switch would be induced by the rechargeable medium to place the charging circuit in the charging state. Otherwise, the charging circuit would be in the non-charging state. The scope of the exclusive right sought by the Applicant(s) is therefore intended to be limited solely by the appended claims.

## Claims

1. A charging cradle (310) for a rechargeable medium (300) with a charging contact (304), the charging cradle having a receiving area (330) for receiving the rechargeable medium, the charging cradle comprising:
an actuator (314) for moving a charging contact (320) of the charging cradle to electrically couple or decouple from the charging contact (304) of the rechargeable medium, the charging contact (320) of the charging cradle being coupled to a second end (318) of the actuator and being moved by the rechargeable medium urging a first end (316) of the actuator, the two ends being pivotably coupled.

2. The charging cradle according to claim 1, further comprising:
a charging circuit coupled to the charging contact of the charging cradle and a power source.

3. The charging cradle according to claim 1 or 2, wherein the actuator is coupled to the charging cradle at a pivot.

4. The charging cradle according to claim 3, wherein the pivot is positioned between the first end and the second end.

5. The charging cradle according to any one of the claims 1-4, wherein the charging contact of the rechargeable medium is on a side surface of the rechargeable medium.

6. The charging cradle according to any one of the claims 1-5, wherein the charging contact of the charging cradle protrudes into the receiving area.

7. The charging cradle according to any one of the claims 1-6, wherein the first end of the actuator being positioned in the receiving area.

8. The charging cradle according to any one of the claims 1-7, wherein the receiving area is shaped to cradle the rechargeable medium.

9. The charging cradle according to any one of the claims 1-8, adapted to a rechargeable medium comprising two charging contacts.

10. The charging cradle according to any one of the claims 1-9, adapted to a rechargeable medium which is a mobile electronic device.

11. The charging cradle according to any one of the claims 1-10, adapted to a rechargeable medium which is a battery.

12. The charging cradle according to any one of the claims 1-11, adapted to a rechargeable medium comprising a housing made of a conductive material.

## Patentansprüche

1. Eine Ladestation (310) für ein wiederaufladbares Medium (300) mit einem Ladekontakt (304), wobei die Ladestation einen Aufnahmebereich (330) hat zur Aufnahme des wiederaufladbaren Mediums, wobei die Ladestation aufweist:
einen Aktuator (314) zum Bewegen eines Ladekontakts (320) der Ladestation zum elektrischen Koppeln oder Entkoppeln von dem Ladekontakt (304) des wiederaufladbaren Mediums, wobei der Ladekontakt (320) der Ladestation mit einem zweiten Ende (318) des Aktuators gekoppelt ist und durch das wiederaufladbare Medium bewegt wird, das ein erstes Ende (316) des Aktuators beeinflusst, wobei die zwei Enden schwenkbar gekoppelt sind.

2. Die Ladestation gemäß Anspruch 1, die weiter aufweist:
eine Ladeschaltung, die mit dem Ladekontakt der Ladestation und einer Stromquelle gekoppelt ist.

3. Die Ladestation gemäß Anspruch 1 oder 2, wobei der Aktuator mit der Ladestation an einem Drehpunkt gekoppelt ist.

4. Die Ladestation gemäß Anspruch 3, wobei der Drehpunkt zwischen dem ersten Ende und dem zweiten Ende positioniert ist.

5. Die Ladestation gemäß einem der Ansprüche 1-4, wobei der Ladekontakt des wiederaufladbaren Mediums an einer Seitenfläche des wiederaufladbaren Mediums ist.

6. Die Ladestation gemäß einem der Ansprüche 1-5, wobei der Ladekontakt der Ladestation in den Aufnahmebereich ragt.

7. Die Ladestation gemäß einem der Ansprüche 1-6, wobei das erste Ende des Aktuators in dem Aufnahmebereich positioniert ist.

8. Die Ladestation gemäß einem der Ansprüche 1-7, wobei der Aufnahmebereich geformt ist, das wiederaufladbare Medium aufzunehmen.

9. Die Ladestation gemäß einem der Ansprüche 1-8, die ausgebildet ist für ein wiederaufladbares Medium, das zwei Ladekontakte aufweist.

10. Die Ladestation gemäß einem der Ansprüche 1-9, die ausgebildet ist für ein wiederaufladbares Medium, das eine mobile elektronische Vorrichtung ist.

11. Die Ladestation gemäß einem der Ansprüche 1-10, die ausgebildet ist für ein wiederaufladbares Medium, das eine Batterie ist.

12. Die Ladestation gemäß einem der Ansprüche 1-11, die ausgebildet ist für ein wiederaufladbares Medium, das ein Gehäuse aus einem leitenden Material aufweist.

## Revendications

1. Socle de charge (310) destiné à un support rechargeable (300) avec un contact de charge (304), le socle de charge ayant une zone de réception (330) permettant de recevoir le support rechargeable, le socle de charge comprenant :
un actionneur (314) destiné à déplacer un contact de charge (320) du socle de charge pour être couplé électriquement au contact de charge (304) du support rechargeable ou être découplé électriquement de celui-ci, le contact de charge (320) du socle de charge étant couplé à une deuxième extrémité (318) de l'actionneur et étant déplacé par le support rechargeable en poussant une première extrémité (316) de l'actionneur ; les deux extrémités étant couplées de manière pivotante.

2. Socle de charge selon la revendication 1, comprenant en outré :
un circuit de charge couplé au contact de charge du socle de charge et à un bloc d'alimentation.

3. Socle de charge selon la revendication 1 ou 2, dans lequel l'actionneur est couplé au socle de charge au niveau d'un pivot.

4. Socle de charge selon la revendication 3, dans lequel le pivot est placé entre la première extrémité et la deuxième extrémité.

5. Socle de charge selon l'une quelconque des revendications 1 à 4, dans lequel le contact de charge du support rechargeable se trouve sur une surface latérale du support rechargeable.

6. Socle de charge selon l'une quelconque des revendications 1 à 5, dans lequel le contact de charge du socle de charge fait saillie dans la zone de réception.

7. Socle de charge selon l'une quelconque des revendications 1 à 6, dans lequel la première extrémité de l'actionneur est placée dans la zone de réception.

8. Socle de charge selon l'une quelconque des revendications 1 à 7, dans lequel la zone de réception est conformée pour supporter le support rechargeable.

9. Socle de charge selon l'une quelconque des revendications 1 à 8, conçu pour un support rechargeable comprenant deux contacts de charge.

10. Socle de charge selon l'une quelconque des revendications 1 à 9, conçu pour un support rechargeable qui est un dispositif électronique mobile.

11. Socle de charge selon l'une quelconque des revendications 1 à 10, conçu pour un support rechargeable qui est une batterie.

12. Socle de charge selon l'une quelconque des revendications 1 à 11, conçu pour un support rechargeable comprenant un boîtier réalisé en un matériau conducteur.
